# NEUE EUROPÄISCHE PATENTSCHRIFT

(11) **EP 2 640 621 B2**
(45) Veröffentlichungstag und Bekanntmachung des Hinweises auf die Entscheidung über den Einspruch: **21.08.2019**
(45) Hinweis auf die Patenterteilung: 20.08.2014
(21) Anmeldenummer: 12753060.8
(22) Anmeldetag: 14.06.2012
(51) Int. Cl.: B62D 1/06, B62D 1/04

(54) **LENKRAD FÜR EIN KRAFTFAHRZEUG**
STEERING WHEEL FOR A VEHICLE
VOLANT POUR VÉHICULE À MOTEUR

(30) Priorität: 22.06.2011 DE 102011104994
(43) Veröffentlichungstag der Anmeldung: 25.09.2013
(73) Patentinhaber: Schipek GmbH, 72160 Horb (DE)
(72) Erfinder: PEKARI, Christoph, 72184 Eutingen (DE)
(74) Vertreter: Klocke, Peter
(86) Internationale Anmeldenummer: PCT/DE2012/100178
(87) Internationale Veröffentlichungsnummer: WO 2012/175075

(56) Entgegenhaltungen:
- EP-A1- 1 069 023
- EP-A1- 1 939 063
- EP-A2- 1 964 751
- WO-A2-2006/127835
- DE-A1-102005 061 697
- DE-A1-102007 028 201
- DE-U1- 8 906 358
- GB-A- 980 673
- JP-A- 2009 126 448
- US-A- 5 205 186
- US-A1- 2009 178 509

## Beschreibung

Die Erfindung betrifft ein Lenkrad für ein Kraftfahrzeug mit einem Lenkradgrundkörper und einer Ummantelung, welche wenigstens zwei den Lenkradgrundkörper außenumfangsseitig umgebenden Streifen umfasst, wobei. ein erstes freies Ende der wenigstens zwei Streifen in einer ersten Nut, welche in dem Lenkradgrundkörper ausgebildet ist, und ein zweites freies Ende der wenigstens zwei Streifen ebenfalls in dem Lenkradgrundkörper ausgebildeten zweiten Nut lagegesichert aufgenommen sind.

Die DE 10 2007 028 201 A1 beschreibt ein lederummanteltes Lenkrad. Zwei Lederstreifen sind an einem ersten Ende miteinander vernäht. Um eine besonders gute Positionierbarkeit der beiden Lederstreifen am Lenkradkranz zu erreichen, sind die vernähten Enden der beiden Lederstreifen in eine Nut eingeklemmt, welche entlang des Lenkradkranzes in dessen um die Nabe des Lenkrads verlaufende Umfangsrichtung ausgebildet ist. Nach dem Einbringen der vernähten Enden in die Nut werden die beiden Lederstreifen dann außenumfangsseitig an die Oberfläche des Lenkradkranzes angelegt. Anschließend werden die freien Enden der beiden Lederstreifen mittels einer Naht miteinander verbunden.

Des Weiteren ist es aus dem Stand der Technik bekannt, zur Ummantelung eines Lenkradkranzes lediglich einen Lederstreifen vorzusehen, dessen Breite im Wesentlichen 2πr entspricht, wobei r der Radius einer Querschnittsfläche des Lenkradkranzes ist. Die Länge des Lederstreifens entspricht hierbei der Länge des Lenkradkranzes in um die Nabe des Lenkrads umlaufender Richtung gesehen. Dieser Lederstreifen wird an seinen beiden Enden mit einer Vorstichnaht versehen. Wenn dann der Lederstreifen um den Lenkradkranz gelegt wird, grenzen seine einander gegenüberliegenden Ränder auf Stoß aneinander. Die Stiche der Vorstichnaht werden anschließend miteinander verbunden. Die hierfür vorzusehende Verbindungsnaht, etwa eine Indianapolis-Naht, wird per Hand durchgeführt, da bei an dem Lenkradkranz angeordnetem Lederstreifen keine Nähmaschine zum Einsatz kommen kann. Auch bei einer Lenkradummantelung, bei welcher der Lenkradkranz keine reine Torusform hat und entsprechend der Streifen eine komplizierte Grundform aufweist, ist üblicherweise zum Verbinden der freien Enden des Streifens am Lenkrad das Vernähen per Hand notwendig.

In der EP 1 069 023 A1 ist grundsätzlich offenbart, zwei Lederstreifen zu verwenden, die in zweit Nuten gehalten sind. Als Ziel kann dort angesehen werden, die Vernähung an der Lenkradummantelung abzuschaffen und ausschließlich durch Verklemmen bzw. Verklebung zu ersetzen. Damit fehlt gerade die Vernähung als typische Lederzierdarstellung. Die maschinelle Vernähung wird dort nicht erwähnt. Es ist zwar grundsätzlich durch die tiefen Nuten im Lenkradgrundkörper möglich, verschiedene Lenkradummantelungsmaterialien einzusetzen, aber es wäre hierbei weiterhin die Arbeitszeit und damit kostenaufwendigeren Naht von Nöten, keinerlei maschinelle Näharbeiten sind möglich, da direkt am Lenkrad nur per Hand genäht werden kann. Außerdem sind bei der in der EP 1069023vorgeschlagenen Lösung die Kombinationsmöglichkeiten sehr eingeschränkt, weil Kedern, Pasteln und Leuchtbänder entweder nicht oder nur mit sehr hohem Arbeitsaufwand eingeklebt werden könnten. Die Qualität einer solchen Mehrfachverklebung in jeweils einer Nut wird zudem von der Qualität her fraglich und es ist wahrscheinlich, dass sie der geforderten Beanspruchung nicht standhält. Es ergäbe sich hier also eine Qualitätsmangel und wäre zudem viel zu zeitaufwendig. Um andere Variationen vorzunehmen wären mehrere tiefe Nuten in den Lenkradgrundkörper einzufräsen, die dann aber entscheidend die Stabilität des Lenkradgrundkörpers in Frage stellen.

Dieses Vernähen der Ummantelung eines Lenkrads per Hand ist sehr aufwändig und somit kostenintensiv.

Aufgabe der vorliegenden Erfindung ist es daher, ein Lenkrad der eingangs genannten Art zu schaffen, welches besonders aufwandsarm in der Fertigung ist.

Diese Aufgabe wird durch ein Lenkrad mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Bei dem erfindungsgemäßen Lenkrad für ein Kraftfahrzeug werden die in einer gemeinsamen Nut aufgenommenen freien Enden der mindesten zwei Streifen mit wenigstens einer maschinell gefertigten Ziernaht versehen. Die Ziernaht kann nämlich vor dem Einbringen der beiden Enden in die Nut mit einer Nähmaschine hergestellt werden, so dass an dem Lenkrad dann eine Ziernaht vorhanden ist, wie dies bei einer von Hand gefertigten Ziernaht der Fall ist. Nach dem maschinellen Fertigen der Ziernaht werden dann die mit der Ziernaht versehenen freien Enden der beiden Streifen in die gemeinsame Nut eingebracht. Durch dieses Einbringen der freien Enden in die Nut wird die Ummantelung am Lenkradgrundkörper befestigt. So können in der Ummantelung vielfältige und komplexe Ziernahtmuster vorgesehen werden, ohne dass diese per Hand ausgeführt zu werden brauchen.

Die Festlegung der Ummantelung an dem Lenkradgrundkörper erfolgt durch Einbringen der freien Enden in die jeweilige Nut, ohne dass am Lenkrad per Hand Näharbeiten durchgeführt zu werden brauchen. In alternativen Ausführungsformen können auch mehr als zwei Streifen vorgesehen sein, deren jeweilige Enden in entsprechenden, in Umlaufrichtung des Lenkradkranzes um die Nabe des Lenkrads gesehen am Lenkradkranz umlaufenden Nuten festgelegt sind.

Zusätzlich sind die in einer gemeinsamen Nut aufgenommenen freien Enden der beiden Streifen mit wenigstens einer in der gemeinsamen Nut angeordneten Paspel verbunden sein. Eine solche Zierpaspel, also ein einfach umgeschlagener Streifen, führt insbesondere dann zu einer optisch sehr ansprechenden Anmutung des Lenkrads, wenn sie in einer anderen Farbe ausgeführt ist als die Streifen. Das Verbinden der freien Enden der beiden Streifen mit der Paspel durch maschinelles Vernähen erfolgt, also bevor die Ummantelung an dem Grundkörper des Lenkrads angebracht wird.

Um die Fixierung der Enden des wenigstens einen Streifens in der jeweiligen Nut zu verbessern, kann ein Klebstoff vorgesehen sein. Der Klebstoff kann zumindest abschnittsweise in der Nut angeordnet sein.

Wenn zusätzlich oder alternativ zumindest bereichsweise auf den Lenkradgrundkörper und/oder auf die Innenseite der Ummantelung Klebstoff aufgebracht ist, wird eine besonders sichere Anbindung der Ummantelung an den Lenkradgrundkörper erreicht.

In die Nut können Beleuchtungselemente wie LEDs, Leuchtlitzen etc. integriert sein, die für eine (Effekt-)Beleuchtung der Lenkradumgebung genutzt werden können.

Zum Fertigen eines Lenkrads für ein Kraftfahrzeug wird ein Lenkradgrundkörper mit einer Ummantelung versehen, welche wenigstens zwei den Lenkradgrundkörper außenumfangsseitig umgebende Streifen umfasst, wobei ein erstes freies Ende der wenigstens zwei Streifen maschinell mit mindestens einer Ziernaht verbunden werden bevor sie in einer ersten Nut festgelegt werden, welche in dem Lenkradgrundkörper ausgebildet ist, und anschließend die zweiten freien Enden der wenigstens zwei Streifen durch Einbringen in eine in dem Lenkradgrundkörper ausgebildete zweite Nut an dem Lenkradgrundkörper festgelegt werden. Eine solche Anordnung der Ummantelung an dem Lenkradgrundkörper ist besonders aufwandsarm, da kein Vernähen des Streifens von Hand notwendig ist.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination verwendbar.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigen:
- Fig. 1: in einer perspektivischen, schematischen Schnittansicht einen Lenkradkranz eines Lenkrads, bei welchem die freien Enden zweier Lederstreifen in jeweiligen Nuten aufgenommen sind, welche in Umfangsrichtung des Lenkradkranzes um eine Nabe des Lenkrads gesehen umlaufend in einem Grundkörper des Lenkradkranzes ausgebildet sind;
- Fig. 2: die beiden Lederstreifen, deren erste freie Enden mit einer Zierpaspel vernäht sind, vor dem Anordnen der beiden Enden in einer der beiden in dem Grundkörper des Lenkradkranzes vorgesehenen Nuten;
- Fig. 3: die beiden mit der Zierpaspel verbundenen Enden der Lederstreifen, welche einen in die Nut einbringbaren Saum bilden;
- Fig. 4: in einer Draufsicht die beiden Lederstreifen, welche zusätzlich zu der Zierpaspel an ihrem zur Aufnahme in der Nut bestimmten Ende eine jeweilige Ziernaht aufweisen; und
- Fig. 5: einen stark vereinfachten Zuschnitt eines einzigen Lederstreifens zum Ummanteln eines Lenkradkranzes, dessen Grundkörper lediglich eine in Umfangsrichtung des Lenkradkranzes um die Nabe des Lenkrads gesehen umlaufende Nut aufweist.

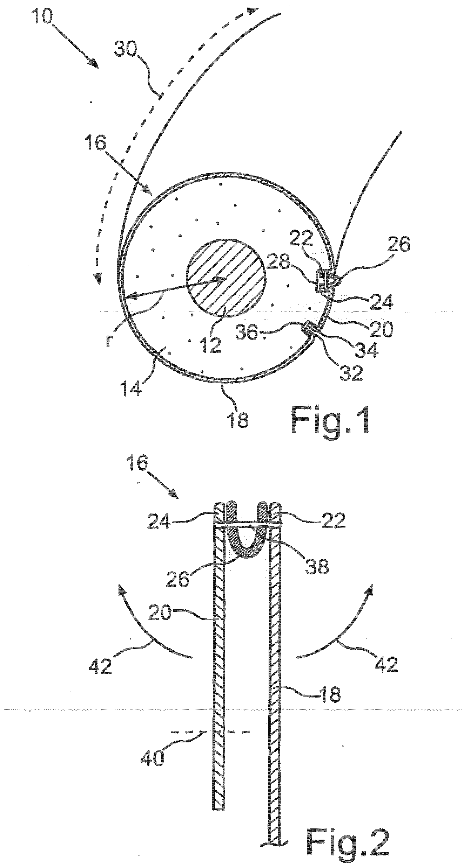

Von einem Lenkrad für ein Kraftfahrzeug ist in Fig. 1 schematisch und vereinfacht ein Lenkradkranz 10 gezeigt. Der Lenkradkranz 10 umfasst eine Tragstruktur 12 aus einem Metall, etwa aus einer Aluminiumlegierung, welche von einem Kunststoff, insbesondere einen Schaumstoff 14 umhüllt ist. Der so gebildete Grundkörper des Lenkradkranzes 10 hat einen Radius r.

Außenumfangsseitig ist der Grundkörper von einer Lederummantelung 16 umgeben, welche bei dem in Fig. 1 gezeigten Ausführungsbeispiel einen ersten Lederstreifen 18 einen zweiten Lederstreifen 20 umfasst. Ein erstes freies Ende 22 des ersten Lederstreifens 18 und ein zweites freies Ende 24 des zweiten Lederstreifens 20 sind mit einer Zierpaspel 26 vernäht. Diese beiden freien Enden 22, 24 und die Zierpaspel 26 sind in einer Nut 28 aufgenommen, welche in dem Schaumstoff 14 des Grundkörpers des Lenkradkranzes 10 ausgebildet ist. Die Nut 28 läuft in eine Umfangsrichtung des Lenkradkranzes 10 um eine (nicht gezeigte) Nabe des Lenkrads gesehen um, wobei diese Umfangsrichtung in Fig. 1 durch einen Doppelpfeil 30 angegeben ist.

Ein zweites freies Ende 32 des ersten Lederstreifens 18 und ein zweites freies Ende 34 des zweiten Lederstreifens 20 sind in einer zweiten Nut 36 aufgenommen, welche parallel zu der ersten Nut 28 in dem Grundkörper des Lenkradkranzes 10 angeordnet ist. Auch die zweite Nut 36 ist in dem Schaumstoff 14 des Grundkörpers des Lenkradkranzes 10 ausgebildet.

Bei der Fertigung des Lenkrads werden zunächst die beiden freien Enden 22, 24 der beiden Lederstreifen 18, 20 mit der Zierpaspel 26 maschinell vernäht (vgl. Fig. 2). Dies geschieht, bevor die beiden freien Enden 22, 24 in die erste Nut 28 eingebracht werden. Hierbei wird die Breite der beiden Lederstreifen 18, 20 so gewählt, dass eine Naht 38, welche die Lederstreifen 18, 20 mit der Zierpaspel verbindet, bequem mit einer Nähmaschine erstellt werden kann.

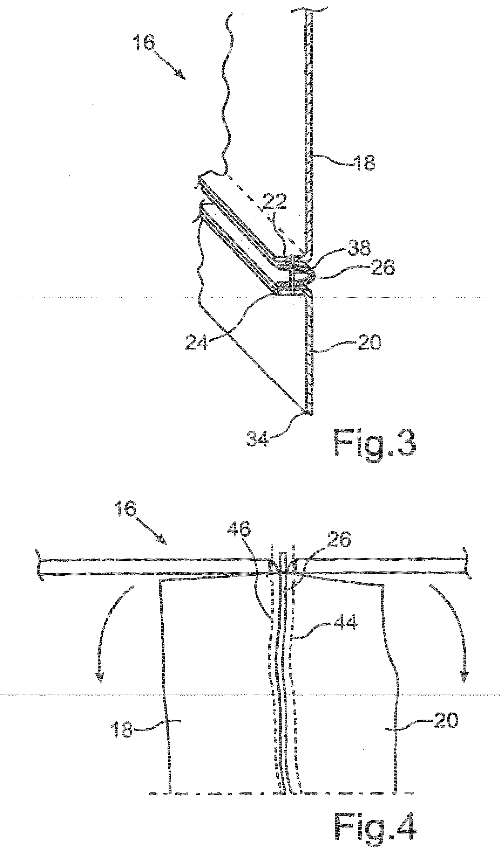

Anschließend wird der schmalere Lederstreifen 20 auf die vorgesehene Breite beschnitten. Eine Markierung 40 gibt in Fig. 2 schematisch die Stelle an, an welcher der Beschnitt durchgeführt wird. Auch der breitere Lederstreifen 18, welcher den größeren Teil des Grundkörpers des Lenkradkranzes 10 umgibt, wird auf die richtige Breite beschnitten, und zwar so, dass die zweiten freien Enden 32, 34 der beiden Lederstreifen 18, 20 in die zweite Nut 36 eingeführt werden können. Bewegungspfeile 42 veranschaulichen in Fig. 2 ein Umlegen der beiden Lederstreifen 18, 20, welches derart vorgenommen wird, dass die ersten beiden freien Enden 22, 24 der Lederstreifen 18, 20 zusammen mit der Zierpaspel 26 einen Saum bilden (vgl. Fig. 3).

Nach dem Beschneiden haben der schmale Lederstreifen 20 und der breitere Lederstreifen 18 die zum Ummanteln des Grundkörpers des Lenkradkranzes 10 vorgesehene Breite. Wie aus Fig. 3 ersichtlich, kann dann der die Zierpaspel 26 umfassende Saum in die hierfür vorgesehene erste Nut 28 eingeführt werden.

Anschließend werden die beiden Lederstreifen 18, 20 so um den Grundkörper des Lenkradkranzes 10 herumgeführt, dass ihre freien Enden 32, 34 im Bereich der zweiten Nut 36 zu liegen kommen (vgl. Fig. 1). Die beiden freien Enden 32, 34 werden dann in die mit Klebstoff versehene zweite Nut 36 eingeklemmt. So kann die Lederummantelung 16 an dem Grundkörper des Lenkradkranzes 10 befestigt werden, ohne dass am Lenkrad per Hand eine Naht hergestellt zu werden braucht.

Bei der in Fig. 4 gezeigten Lederummantelung 16 für den Lenkradkranz 10 ist zusätzlich zu der Zierpaspel 26 an den beiden Lederstreifen 18, 20 im Bereich ihrer in der ersten Nut 28 aufzunehmenden Enden 22, 24 eine jeweilige Ziernaht 44, 46 vorgesehen. Auch diese Ziernähte 44, 46 werden vor dem Anbringen der Lederummantelung 16 an dem Grundkörper des Lenkradkranzes 10 maschinell hergestellt. Es können auch lediglich eine oder mehr als die vorliegend exemplarisch gezeigten zwei Ziernähte 44, 46 vorgesehen sein, und die Zierpaspel 26 kann entfallen.

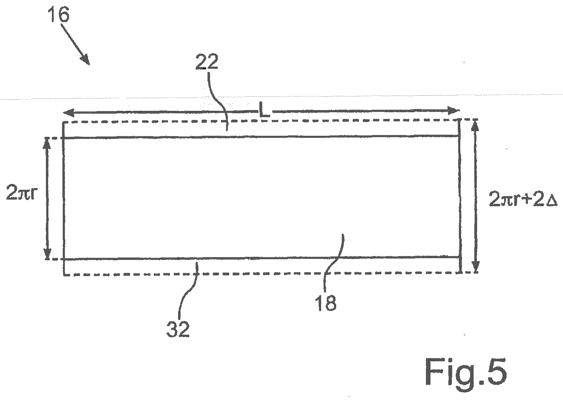

Bei einer weiteren, in Fig. 5 gezeigten Lederummantelung 16 ist lediglich der erste Lederstreifen 18 zum Ummanteln des Grundkörpers des Lenkradkranzes 10 vorgesehen. Hierbei entspricht dann eine Länge L des Lederstreifens 18 dem Außenumfang des Lenkradkranzes 10 in die um die Nabe des Lenkrads umlaufende, in Fig. 1 durch den Doppelpfeil 30 veranschaulichte Richtung.

Eine Breite des Lederstreifens 18 ist hierbei um die Breite der freien Enden 22, 32 - also um 2Δ - größer als der Umfang 2πr des Grundkörpers des Lenkradkranzes 10. Dadurch können die jeweiligen freien Ende 22, 32 in die gemeinsame Nut 36 eingeführt werden, welche in dem Schaumstoff 14 des Grundkörpers des Lenkradkranzes 10 vorgesehen ist. Durch das Fixieren der beiden in die Nut 36 eingeklemmten freien Ende 22, 32 des Lederstreifens 18 kann auch hier auf ein von Hand vorzunehmendes Vernähen des Lederstreifens 18 am Lenkrad verzichtet werden. Da in diesem Ausführungsbeispiel keine Ziernaht vorgesehen ist, kann die Nut 28 entfallen.

Sowohl die gemeinsame Nut 36 als auch Bereiche der Oberfläche des Grundkörpers des Lenkradskranzes 10, welche der Lederummantelung 16 zugewandt sind, können mit einem Klebstoff versehen werden, um die Festlegung der Lederummantelung 16 an dem Grundkörper des Lenkradkranzes 10 zu verbessern.

In der Nut 36 kann eine ambiente Beleuchtung integriert sein, beispielsweise in Form einer Leuchtlitze oder in Form eines (oder mehrerer nebeneinander angeordneter) LED-Leuchten. Dies gestattet neue Freiräume in Bezug auf das Beleuchtungskonzept im Fahrzeuginneren und - ganz generell - das Innenraumdesign, die bisher nicht erreicht werden konnten.

## Patentansprüche

1. Lenkrad für ein Kraftfahrzeug, mit einem Lenkradgrundkörper (12, 14) und einer Ummantelung (16), welche wenigstens zwei den Lenkradgrundkörper (12, 14) außenumfangsseitig umgebende Streifen (18, 20) umfasst, wobei ein erstes freies Ende (22, 24) der wenigstens zwei Streifen (18, 20) in einer ersten Nut (28), welche in dem Lenkradgrundkörper (12, 14) ausgebildet ist, und ein zweites freies Ende (32, 34) der wenigstens zwei Streifen (18, 20) ebenfalls in einer in dem Lenkradgrundkörper (12, 14) ausgebildeten zweiten Nut (36) lagegesichert aufgenommen sind, **dadurch gekennzeichnet, dass** die in der gemeinsamen ersten Nut (28) aufgenommenen freien Enden (22, 24) der beiden Streifen (18, 20) mit wenigstens einer maschinell vor dem Einbringen in die Nut (28) gefertigten Ziernaht (44, 46) versehen und zusätzlich die in der gemeinsamen ersten Nut (28) aufgenommenen freien Enden (22, 24) der beiden Streifen (18, 20) mit wenigstens einer in der gemeinsamen Nut (28) angeordneten Paspel (26) maschinell vernäht sind.

2. Lenkrad nach Anspruch 1, **dadurch gekennzeichnet, dass** die Enden (22, 24, 32, 34) der wenigstens zwei Streifen (18, 20) mittels eines Klebstoffs in der jeweiligen Nut (28, 36) gehalten sind.

3. Lenkrad nach einem der Ansprüche 1 oder 2, **dadurch gekennzeichnet, dass** in die Nut (28, 36) ein Beleuchtungselement integriert ist.

4. Lenkrad nach einem der Ansprüche 1 bis 3, **dadurch gekennzeichnet, dass** der Lenkradgrundkörper (12, 14) eine, insbesondere aus einem Metall gebildete, Tragstruktur (12) umfasst, welche von einem, insbesondere als Schaumstoff (14) ausgebildeten, Kunststoff umgeben ist, wobei die wenigstens eine Nut (28, 36) in dem Kunststoff ausgebildet ist.

## Claims

1. A steering wheel for a motor vehicle, with a steering wheel base body (14) and a jacket (16) that comprises at least two strips (18, 20) surrounding the steering wheel base body (14) on the outer circumference, wherein a first free end (22, 24) of the at least two strips (18, 20) being held in position securely in a first groove (28) formed in the steering wheel base body (14), and a second free end (32, 34) of the at least two strips (18, 20) is also held in position securely in a second groove (36) formed also in the base body of the steering wheel (14), **characterized in that** the free ends (22, 24) of the two strips (18, 20) held in a common groove (28) are equipped with at least one mechanically produced decorative seam (44, 46) and additionally the free ends (22, 24) of the two strips (18, 20) held in a first common groove (28) are mechanically sewn to at least one braid (26) arranged in the common groove (28).

2. The steering wheel according to Claims1, **characterized in that** the ends (22, 24, 32, 34) of the at least two strips (18, 20) are held in the associated groove (28, 36) by means of an adhesive.

3. The steering wheel according to any one of the Claims 1 or 2, **characterized in that** a lighting element is integrated in the groove (28, 36).

4. The steering wheel according to any one of the Claims 1 to 3, **characterized in that** the base body of the steering wheel comprises a bearing structure (12), specifically one made of a metal, that is surrounded by a synthetic material, specifically a foam material (14), with at least one groove (28, 36) formed in the synthetic material.

## Revendications

1. Volant de direction destiné à un véhicule automobile, comprenant un corps de base (12, 14) et un gainage (16) composé d'au moins deux bandes (18, 20) qui ceinturent le pourtour extérieur dudit corps de base (12, 14) du volant, une première extrémité libre (22, 24) des deux bandes (18, 20) à présence minimale étant bloquée à demeure dans une première rainure (28) pratiquée dans ledit corps de base (12, 14) du volant, et une seconde extrémité libre (32, 34) desdites deux bandes (18, 20), à présence minimale, étant pareillement bloquée à demeure dans une seconde rainure (36) pratiquée dans ledit corps de base (12, 14) du volant, **caractérisé par le fait que** les extrémités libres (22, 24) des deux bandes (18, 20), logées dans la première rainure commune (28), sont pourvues d'au moins une couture décorative (44, 46) confectionnée à la machine préalablement à l'insertion dans la rainure (28) et additionnel les extrémités libres (22, 24) des deux bandes (18, 20), logées dans la première rainure commune (28), sont reliées par couture à la machine à au moins un passepoil (26) disposé dans ladite rainure commune (28).

2. Volant de direction selon la revendication 1, **caractérisé par le fait que** que les extrémités (22, 24, 32, 34) des deux bandes (18, 20), à présence minimale, sont retenues dans la rainure respective (28, 36) au moyen d'un adhésif.

3. Volant de direction selon la revendication 1 ou 2, **caractérisé par le fait qu'**un élément d'éclairage est intégré dans la rainure (28, 36).

4. Volant de direction selon l'une des revendications 1 à 3, **caractérisé par** le fait le corps de base (12, 14) du volant inclut une structure de support (12) notamment constituée d'un métal et entourée d'une matière plastique se présentant comme une mousse (14), en particulier, la rainure (28, 36) à présence minimale étant pratiquée dans ladite matière plastique.
